(19) Europäisches Patentamt
European Patent Office
Office européen des brevets

(11) Publication number: 0 252 324 A1

# (12) EUROPEAN PATENT APPLICATION

(21) Application number: 87108394.5

(51) Int. Cl.4: C07F 15/00 , A61K 49/00

(22) Date of filing: 10.06.87

(30) Priority: 10.06.86 PL 259998

(43) Date of publication of application:
13.01.88 Bulletin 88/02

(84) Designated Contracting States:
BE CH DE FR GB IT LI NL

(71) Applicant: UNIWERSYTET WARSZAWSKI
Krakowskie Przedmiescie 26/28
Warszawa(PL)

(72) Inventor: Samochocka, Krystyna
ul. Danilowskiego 1/16
Warszawa(PL)
Inventor: Szymendera, Janusz Joszef
ul. Pruszkowska 12/160
Warszawa(PL)

(74) Representative: Ahner, Francis et al
CABINET REGIMBEAU 26, avenue Kléber
F-75116 Paris(FR)

## (54) A method for pharmaceutic production of a cis-platinum compound.

(57) An object of the invention is a method for pharmaceutic production, particularly for diagnosis of neoplasmas, based on the formula I. The object of the invention is based on that, the aqueous solution of hydrazine hydrochloride in the quantity of the 96 % calculated stoichiometric value is added to potassium hexachloroplatinate, the suspension is mixed about two hours at the temperature 50 to 60°C and next, about 30 minutes at the temperature 80 to 90°C, and next upon cooling down of the reaction mixture, the unreacted potassium hexachloroplatinate is separated, the solution is decanted and filtered, and pH of the filtrate is brought to the value 3 to 5, next to the solution, methionine is added in the quantity adequate to the molar relations of methionine to tetrachloroplatinate 2:l, and upon a careful mixing during about 30 minutes, metal salt is added and particularly ytterbium chloride, tagged Yb-l69 and next, the components are mixed and pH of the solution is brought to the value about 6.5 and at last, the solution is infiltrated through the sterile filter.

EP 0 252 324 A1

Xerox Copy Centre

# A METHOD FOR PHARMACEUTIC PRODUCTION OF A CIS-PLATINUM COMPOUND

## Field of the Invention

The present invention relates to a method for the preparation of cis-platinum compound.

The present invention further relates to the use of said cis-platinum compound for the manufacture of pharmaceutical composition especially for diagnosis of neoplasm.

## Prior Art

There is known as the first metallic element compound being applied in chemotherapy of neoplasm-platinum inorganic compound, so-called "cis-platinum", being diaminodichloroplatinum, discovered in 1968 year by Rosenberger and his group.

There is also known the method for production of the inorganic, radioactive platinum compound, like is $^{195}$Pt-cis-platinum.

The disadvantage of the application as radiopharmaceutic the radioactive compound, designed particularly for diagnosis of neoplasm, results first of all from the fact of a very short life of the said isotope, amounting to only just 4 days, a very short, complicated manufacturing process and also - in spite of the animal dosis applied while diagnosis - from the high toxicity of cis-platinum.

As it was proved by the examinations on the animals, the higher dosis or equal to 2,5 mg/kg already caused the pathological effects.

There is also known the method for production of dimethioneplatinum, based on that, to the aqueous solution of potassium tetrachloroplatinate is added methionine by molar relation 2 to l to tetrachloroplatinate and the said mixture is heated during 5 minutes, and as a result of this, chelate compound of dimethionineplatinum is obtained, in which platinum atom is coordinated by sulphur and nitrogen atoms, occured from methionine.

The compound of dimethionineplatinum has not been used up till now for production of pharmaceutics. The disadvantage of the application of this known method for pharmaceutics production, results from the fact, that the said compound contains cyclic ligands.

## Object of the Invention

An object of the present invention is a method for the preparation of cis-platinum compound characterized in that, an aqueous solution of hydrazine hydrochloride in the quantity of the 96% calculated stoichiometric value is added to potassium hexachloroplatinate, the suspension is mixed during about two hours at the temperature 50 to 60°C, and next upon cooling down of the reaction mixture, the unreacted potassium hexachloroplatinate is separated, the solution is decanted and filtered and pH of the filtrate is brought to the value 3 to 5, next to the solution methionine is added in the quantity adequate to the molar relations of methionine to tetrachloroplatinate 2 : l, and upon a careful mixing during about 30 minutes, dichlorodimethionineplatinate is purified, metal salt is added, the components are mixed and pH of the solution is brought to the value about 6.5 and at last the solution is infiltrated through the sterile filter.

The compound obtained is of formula (I)

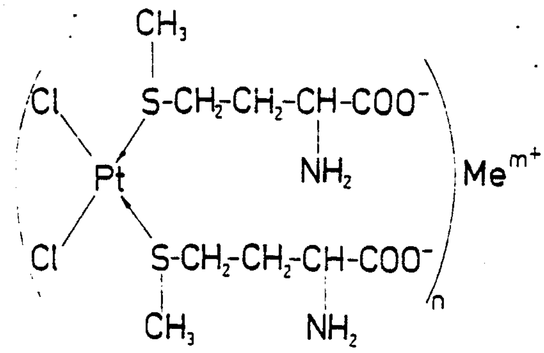

wherein Me represents a metal.

Another object of the invention is the use of compound of formula (I) for the manufacture of pharmaceutical composition, especially for the diagnosis of neoplasm comprising the said compound as active constituent.

The essence of the invention is based on that, the change of the process engineering enables the manufacture of dichlorodimethionineplatinum, which as it was presented as formula (I) - contains non-cyclic ligands and as it was proved unexpectedly by the examinations and tests - its toxicity and mutagenes is very low and upon tagging by metal salts, particularly by ytterbium $^{-169}$chloride, shows an affinity for neoplastic tissues and brings very good results in the scintigraphic examinations.

The method for pharmaceutic production according to the invention, particularly for tumours diagnosis based on the enclosed chemical formula is that, the aqueous solution of hydrazine hydrochloride in the quantity of 96% of the calculated stoichiometric value is added to potassium hexachloroplatinate.

So obtained the reaction suspension is mixed, mainly by the electromagnetic mixer, during about two hours at the temperature 50 to 80°C, and next during about 30 minutes at the temperature 80 to 90°C. Upon cooling down of the reaction mixture, the unreacted potassium hexachloroplatinate is separated by centrifugation, the solution is decanted and filtered through glass wool or milipor and pH of the filtrate is brought to the value of 3 to 5 by the solution of 0,3 N NaOH. Next, to so obtained tetrachloroplatinate, while the continuous mixing, methionine is added in the quantity adequate to the molar relations 2 to I of methionine to tetrachloroplatinate. Upon the careful mixing during about 30 minutes, dichlorodimethionineplatinum complex is purified particularly on the chromatographic column. To the purified complex of dichlorodimethionineplatinum, metal salt is added, mainly chloride or radioactive ytterbium$^{-169}$. The components are mixed during 5 to I0 minutes and next, pH of the solution is brought to the value of about 6.5. At last, the solution is infiltrated through sterile filter and pharmaceutic is ready for administration.

The advantage of pharmaceutic being manufactured according to the invention is its very low toxicity and mutagenes. A dose of $LD_{50}$ for mouse for dichlorodi-D-methionineplatinum amounts to 57I mg/kg. Some metal radionuclides, and particularly Yb-I69, have a good radioactive characteristic and proper biological and physical properties, e.g. the radiation energy gamma Yb-I69, which amounts to from 60 to 300 ksV, as well as the time of a partial atrophy - 32 days, are the good parameters of radionuclide for the scintigraphic examinations.

The metals are making the stable complexes with dichlorodimethionineplatinum, which are purged with urine. e.g. the retention of Yb-I69 complex in the organism of the animals under examination amounts to from 3 to 6% after 24 hours, and after 72 hours up to 3% - what at the relatively long time of the partial atrophy - creates from one side the possibility of carrying out of the examinations at the different longer time intervals and from the other side decreases the radiation load of the organism.

Example

96 µl of the aqueous, one percent solution of hydrazine hydrochloride was added to I0 milligrams of potassium hexachloroplatinate. The reaction mixture was heated in the water bath at the temperature 50 to 60°C during two hours while the continuous mixing by the magnetic mixer. Next, the temperature has been increased up to 85°C for a period of 30 minutes. Upon cooling down, the unreacted potassium hexachloroplatinate has been separated by centrifugation. The solution has been decanted and filtered through glass wool. By the 0,3 N NaOH solution, pH of the solution has been brought to the value about 4. Next, 4.5

milligrams of D-methionine was added, and upon a careful mixing, after about 30 minutes, the complex of dichlorodi-D-methionineplatinum has been purified and l00 µl solution of NaCl physiological salt was added as well as l00 µl of ytterbium chloride tagged Yb-l69 of the activity lmCi, i.e. 37 MBq. The reaction mixture was brought by 0.3 NaOH to the value of pH about 6.5.

The solution obtained in such a way contains the complex of dichlorodi-D-methionineplatinum and sodium chloride as well the complex dichlorodi-D-methionineplatinum tagged Yb-l69. There was ascertained practically, that the solution stored at the temperature of +4°C is stable.

For the biological examinations on the mice, 40 µl of the above mentioned solution per mouse has been taken for intravenous injection. The results of the preparation biodistribution among the control animals as well as with the inoculated chosen tumours are presented in tables I and 2.

TABLE 1 - BIODISTRIBUTION AMONG BALB CONTROL MOUSE AS WELL AS WITH INOCULATED EHRLICH NEOPLASM

| Organ | Upon 24 hours | | Upon 72 hours | |
|---|---|---|---|---|
| | control | neoplasm | control | neoplasm |
| Liver | 0.08 | 0.08 | 0.07 | 0.06 |
| Spleen | 0.03 | 0.03 | 0.07 | 0.03 |
| Kidneys | 0.45 | 0.43 | 0.27 | 0.30 |
| Lungs | 0.02 | 0.02 | 0.03 | 0.02 |
| Bone | 0.18 | 0.15 | 0.22 | 0.23 |
| Blood | 0.004 | 0.005 | 0.002 | 0.002 |
| Muscle | 0.03 | 0.03 | 0.01 | 0.01 |
| Neoplasm | - | 0.07 | - | 0.07 |
| Neoplasm/blood | - | 14 | - | 35 |
| Neoplasm/muscle | - | 2.3 | - | 7 |
| Retention | 6.3 % | 3.0 % | 5.6 % | 3.9 % |

TABLE 2 - BIODISTRIBUTION AMONG B-10 CONTROL MOUSE AS WELL WITH INOCULATED NEOPLASM OF LEUKEMIA

| Organ | upon 24 hours | |
|---|---|---|
| | control | with neoplasm |
| Liver | 0.06 | 0.07 |
| Spleen | 0.02 | 0.02 |
| Kidneys | 0.37 | 0.39 |
| Lungs | 0.02 | 0.01 |
| Bone | 0.16 | 0.09 |
| Blood | 0.002 | 0.003 |
| Muscle | 0.006 | 0.002 |
| Neoplasm | - | 0.06 |
| Neoplasm/blood | - | 20 |
| Neoplasm/muscle | - | 30 |
| Retention | 6 % | 5,5 % |

## Claims

1. Method for the preparation of cis-platinum compound characterized in that, an aqueous solution of hydrazine hydrochloride in the quantity of the 96 % calculated stochiometric value is added to potassium hexachloroplatinate, the suspension is mixed during about two hours at the temperature 50 to 60°C, and next upon cooling down of the reaction mixture, the unreacted potassium hexachloroplatinate is separated, the solution is decanted and filtered and pH of the filtrate is brought to the value 3 to 5, next to the solution methionine is added in the quantity adequate to the molar relations of methionine to tetrachloroplatinate 2 : 1, and upon a careful mixing during about 30 minutes, dichlorodimethionineplatinate is purified, metal salt is added, the components are mixed and pH of the solution is brought to the value about 6.5 and at last the solution is infiltrated through the sterile filter.

2. Use of the compound of formula I :

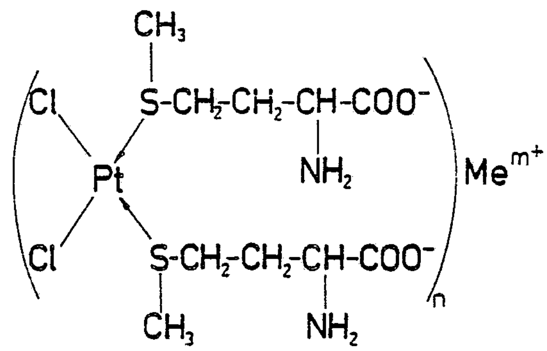

wherein Me represents a metal, according to claim I, for the manufacture of a pharmaceutical composition especially for the diagnosis of neoplasm, comprising said compound as active constituent.

3. Method according to claim 1 wherein the metal is radioactive element Ytterbium-169.

4. Use according to claim 2, wherein Me is radioactive element Ytterbium-169.

European Patent Office

# EUROPEAN SEARCH REPORT

Application number

EP 87 10 8394

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 63, no. 13, 20th December 1965, column 18249g-h, Columbus, Ohio, US; L.M. VOLSHTEIN et al.: "Reaction of methionine with trans-diamminedichloroplatinum-(II)", & ZH. NEORGAN. KHIM. 10(9), 1976-9 (1965) * Whole abstract * --- | 1-4 | C 07 F 15/00<br>A 61 K 49/00 |
| A | CHEMICAL ABSTRACTS, vol. 96, no. 7, 15th February 1982, page 18, abstract no. 45859k, Columbus, Ohio, US; M.F. MOGILEVKINA et al.: "Relation among the structure, properties, and antiblastic activity of complexes of platinum with methionine", & KOORD, KHIM. 1981, 7(8), 1250-4 * Whole abstract * --- | 1-4 | TECHNICAL FIELDS SEARCHED (Int. Cl.4)<br>C 07 F 15/00<br>A 61 K 44/00 |
| A | CHEMICAL ABSTRACTS, vol. 98, no. 22, 30th May 1983, page 695, abstract no. 190547c, Columbus, Ohio, US; D. DALIETOS et al.: "Synthesis of enantiomeric pure cis-dichloroplatinum(II) amino acid complexes", & BIOL. TRACE ELEM. RES. 1982, 4(4), 331-5 * Whole abstract * ----- | 1-4 | |

The present search report has been drawn up for all claims

| Place of search | Date of completion of the search | Examiner |
|---|---|---|
| THE HAGUE | 17-09-1987 | PAUWELS G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document